Europäisches Patentamt

European Patent Office

Office européen des brevets

(11) Veröffentlichungsnummer: **0 307 663 B1**

(12) **EUROPÄISCHE PATENTSCHRIFT**

(45) Veröffentlichungstag der Patentschrift: **27.05.92**

(21) Anmeldenummer: **88113628.7**

(22) Anmeldetag: **22.08.88**

(51) Int. Cl.5: **H02K 1/26,** H02K 1/14

(54) **Kollektormotor zum Antrieb von Hausgeräten, insbesondere Waschmaschinen.**

(30) Priorität: **04.09.87 DE 3729703**

(43) Veröffentlichungstag der Anmeldung:
**22.03.89 Patentblatt 89/12**

(45) Bekanntmachung des Hinweises auf die
Patenterteilung:
**27.05.92 Patentblatt 92/22**

(84) Benannte Vertragsstaaten:
**DE FR GB IT SE**

(56) Entgegenhaltungen:
**DE-A- 3 200 418**
**DE-B- 2 738 175**
**DE-C- 939 464**

**PATENT ABSTRACTS OF JAPAN, Band 10,**
**Nr. 137 (E-405)[2194], 21. Mai 1986, Seite 70 E**
**405; & JP-A-61 1246**

(73) Patentinhaber: **SIEMENS AKTIENGESELL-**
**SCHAFT**
**Wittelsbacherplatz 2**
**W-8000 München 2(DE)**

(72) Erfinder: **Nitt, Karl-Heinz**
**An den Mühltannen 12**
**W-8700 Würzburg(DE)**
Erfinder: **Döblinger, Rüdiger**
**Haupstrasse 14**
**W-8711 Rödelsee(DE)**

## Beschreibung

Die Erfindung bezieht sich auf einen Kollektormotor zum Antrieb von Hausgeräten, insbesondere Waschmaschinen gemäß Oberbegriff des Anspruches 1 bzw. des Anspruches 2; ein derartiger Kollektormotor ist aus der DE-PS 30 08 937 bekannt.

Im bekannten Fall der DE-PS 30 08 937 werden erste, mit ihren Rändern formschlüssig die abgerundeten Spitzen der Polhörner im Sinne einer glatten Mantelfläche umfassende Verschlußmittel für die Pollücken und zweite die Nutzschlitze des Läufers ebenfalls im Sinne einer glatten Mantelfläche verschließende Verschlußmittel vorgesehen.

Durch die DE-PS 29 12 684 ist es weiterhin bekannt, bei einem von Kraftstoff durchströmten Elektromotor in einem Kraftstoff-Förderaggregat das Läuferblechpaket durch einen Schrumpfschlauch zu umhüllen, der vor allem eine mechanische Sicherung der Läuferwicklung gewährleisten und zusätzlich bei Drehung des Läufers eine strömungsgünstige Form herstellen soll.

Aufgabe der vorliegenden Erfindung ist es, bei dem Kollektormotor der eingangs genannten Art, insbesondere bei Waschmaschinen mit hochtouriger Schleuderdrehzahl, auf fertigungstechnisch einfache und trotzdem wirksame Weise den betriebsmäßigen Geräuschpegel niedrig halten zu können. Es hat sich gezeigt, daß dazu möglichst eine weitgehende Minimierung des durch die Pollücken bzw. Nutschlitze im Ständer bzw. Läufer hervorgerufenen Luftschallgeräusche notwendig ist.

Die vorgenannte Aufgabe wird bei einem Kollektormotor der eingangs genannten Art erfindungsgemäß durch die Lehre des Anspruches 1 bzw. des Anspruches 2 gelöst; vorteilhafte Ausgestaltungen der Erfindung sind jeweils Gegenstand der Unteransprüche.

Bei der Herstellung des erfindungsgemäßen Kollektormotors läßt sich eine wesentliche Geräuschminderung auf einfache Weise dadurch erreichen, daß lediglich ein dem luftspaltseitigen Umfang des Läufers bzw. des Ständers entsprechendes Folienstück in Umfangsrichtung auf das Läuferblechpaket bzw. auf das Ständerblechpaket aufgelegt oder ein entsprechender Folienstreifen wendelartig um das Läuferblechpaket umwickelt bzw. auf die bohrungsseitige Umfangsfläche des Ständerblechpaketes aufgelegt wird. Die Festlegung der Folie erfolgt nach einer Ausgestaltung der Erfindung durch Zwischenlage eines Klebers oder in besonders einfacher Weise durch Verwendung einer selbstklebenden Folie.

Die Endkanten des in Umfangsrichtung aufgebrachten Kunststofffolien-Bandes bzw. die benachbarten Seitenkanten des wendelartig aufgewickelten Kunststofffolien-Streifens sind vorteilhafterweise zur weiteren Geräuschminimierung stoßfugig, d.h.

dicht schließend voreinandergelegt. Falls in fertigungstechnisch besonders einfacher Weise nach einer Ausgestaltung der Erfindung die End- bzw. Seitenkanten einander überlappend aufgebracht werden, so ist zweckmäßigerweise dafür zu sorgen, daß die überstehenden Kanten ständerseitig in Hauptdrehrichtung des Motors und läuferseitig entgegen der Hauptdrehrichtung des Motors überlappen, wobei bei verschiedenen Drehrichtungen diejenige als Hauptdrehrichtung zu berücksichtigen ist, die zur größeren Geräuschbildung beiträgt; für einen Kollektormotor zum Antrieb eines Waschautomaten ist dementsprechend als Hauptdrehrichtung diejenige des Motors im Schleuderbetrieb vorgesehen.

Die Erfindung sowie weitere vorteilhafte Ausgestaltungen der Erfindung werden im folgenden anhand zweier schematisch dargestellter Ausführungsbeispiele in der Zeichnung näher erläutert; darin zeigen:

FIG 1   einen radialen Querschnitt durch einen zweipoligen Kollektormotor mit einem den Außenumfang des Läuferblechpaketes abdeckenden Kunststoffolien-Band,

FIG 2   einen radialen Teilschnitt durch einen zweipoligen Kollektormotor mit einem den Bohrungsumfang des Ständerblechpaketes abdeckenden Kunststoffolien-Band,

FIG 3   in einer perspektivischen Darstellung ein den Außenumfang des Läuferblechpaketes abdeckendes Kunststofffolien-Band,

FIG 4   in einer perspektivischen Darstellung ein den Außenumfang des Läuferblechpaketes abdeckenden, wendelartig aufgebrachten Kunststoffolien-Streifen.

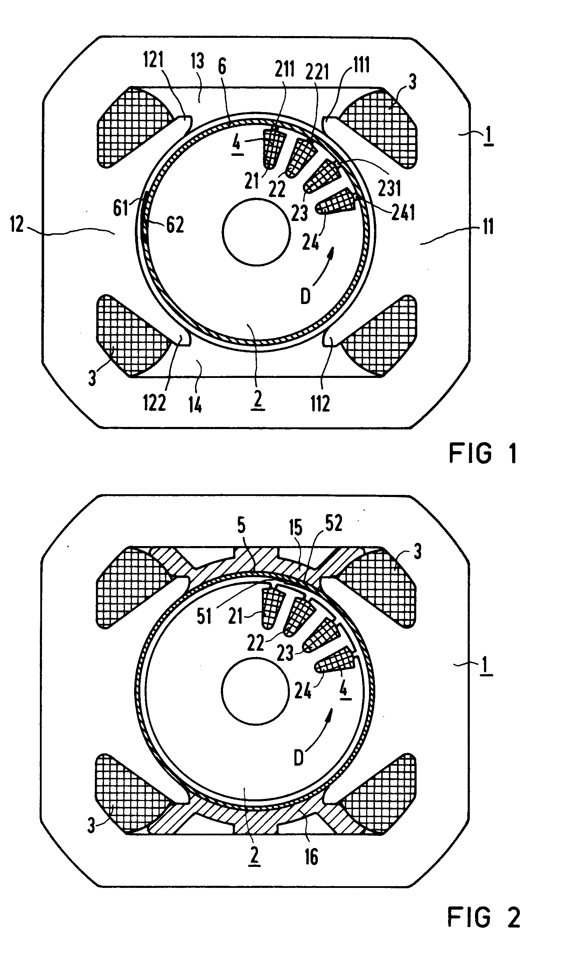

FIG 1,2 zeigen einen zweipoligen Kollektormotor mit einem Ständerblechpaket 1 und einem Läuferblechpaket 2. Die beiden Ständerpole 11,12 sind von einer Ständerwicklung 3 umschlungen; in die Nuten des Läuferblechpaketes 2, von denen in der Zeichnung vier Nuten 21-24 dargestellt sind, ist eine Läuferwicklung 4 eingebracht. Die Nuten 21,22,23,24 sind mit Nutzschlitzen 211, 221,231,241 zur luftspaltseitigen Oberfläche des Läuferblechpekets 2 hin geöffnet.

Gemäß FIG 1 ist der Außenumfang des Läuferblechpaketes 2 von einem Kunststoffolien-Band 6 umschlungen, das die luftspaltseitigen Nutzschlitzöffnungen 211,221,231,241 im Sinne einer luftspaltseitig glatten Mantelfläche abdeckt.

FIG 2 zeigt eine erfindungsgemäße Abdeckung der Innenbohrung des Ständerblechpaketes 1 mittels eines Kunststoffolien-Bandes 5. Zur besseren Auflage des Kunststoffolien-Bandes 5 sind die in FIG 1 besser sichtbaren Pollücken 13,14 zwischen den Polhörnern 111,121 bzw. 112,122 der Ständerpole 11 bzw.12 zusätzlich durch zwischen die Polhörner eingeklemmte in FIG 2 eingezeichnete Auflagebrücken 15,16 ausgefüllt. Diese Auflagebrükken 15,16 benötigen in vorteilhafter Weise keine gesonderte Präzisionsanpassung an den Verlauf der Polhörner 111,121 bzw.112,122 am Bohrungsumfang der Innenbohrung im Sinne einer glatten Mantelfläche, da diese glatte Mantelfläche durch das erfindungsgemäße Kunststoffolien-Band 5 selbst gewährleistet ist.

Eine wesentliche Geräuschminimierung kann bereits entweder durch eine Kunststoffolien-Abdeckung des Läuferblechpaketes 2 gemäß FIG 1 oder des Ständerblechpaketes 1 gemäß FIG 2 erreicht werden. Erfindungsgemäß können jedoch auch beide Abdeckungen gemeinsam angewendet werden, ohne daß dadurch die elektrischen bzw. mechanischen Funktionseigenschaften des Motors beeinträchtigt werden; dies ist insbesondere darin begründet, daß einerseits im Gegensatz zu z.B. Induktionsmotoren die hier vorgesehenen Kollektormotoren einen relativ großen Luftspalt aufweisen können und andererseits die Kunststoffolie keinen Einfluß auf die elektrische Eigenschaften des Motors hat. Aus gleichem Grunde kann nach einer weiteren Ausgestaltung der Erfindung auch ein mehrlagiges Aufbringen des Folienmaterials vorgesehen werden, wodurch sich eine bessere Haltung des Folienbandes insgesamt ergibt.

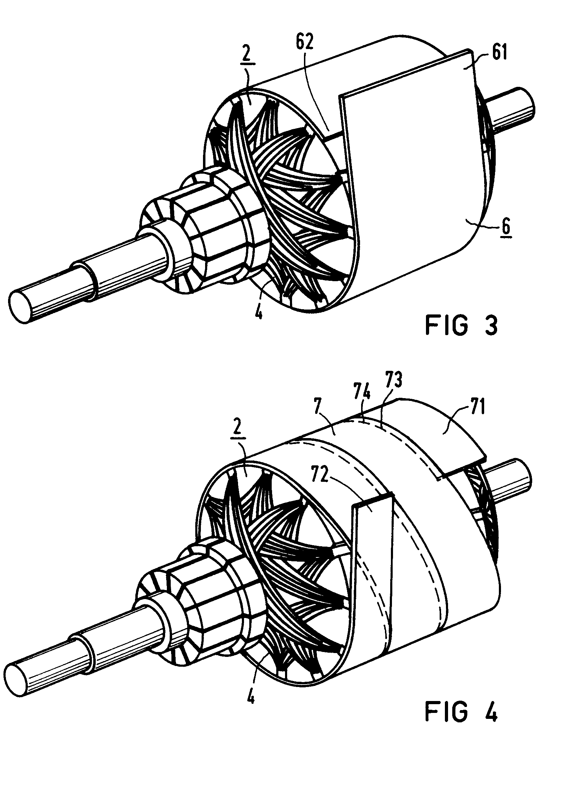

FIG 3,4 zeigen zwei nach Ausgestaltungen der Erfindung vorgesehene unterschiedliche Abdeckungen anhand eines perspektivisch dargestellten Läufers. FIG 3 zeigt ein in Umfangsrichtung um den Außenumfang des Läuferblechpaketes 2 fast fertig gewickeltes Kunststoffolien-Band 6, dessen eine Endkante 61 kurz vor ihrer betriebsmäßigen Endlage dargestellt ist.

FIG 4 zeigt einen wendelartig auf den Umfang des Läuferblechpaketes 2 aufgewickelten Kunststoffolien-Streifen 7, dessen Seitenkanten 73,74 zur Auflage kommen und dessen Endkante 72 kurz vor ihrer Endlage dargestellt ist.

FIG 1,2 zeigen im Schnittbild jeweils ein Überlappen der Endkanten des Kunststoffolien-Bandes 5; FIG 1 zeigt ein Überlappen der einen Endkante 61 über die andere Endkante 62 entgegen der Hauptdrehrichtung D des das Läuferblechpaket 2 umschlingenden Kunststoffolien-Bandes 6. FIG 2 zeigt ein Überlappen des auf das Ständerblechpaket 1 an seiner Innenumfangsfläche aufgebrachten Folienbandes mit einer Überlappung der einen Endkante 51 über die andere Endkante 52 in Hauptdrehrichtung D des Läufers.

**Patentansprüche**

1. Kollektormotor zum Antrieb von Hausgeräten, insbesondere Waschmaschinen, mit Nuten bzw. Pollücken (13,14) aufweisendem Läufer bzw. Ständer und die Nuten bzw. Pollücken im Sinne einer luftspaltseitig glatten Mantelfläche zudeckenden Verschlußmitteln, **dadurch gekennzeichnet**, daß jeweils als Verschlußmittel ein in Umfangsrichtung auf das Ständerblechpaket (2) bzw. das Läuferblechpaket (1) aufgebrachtes einstückiges Kunststoffolien-Band (5 bzw.6) vorgesehen ist. (FIG 1,2)

2. Kollektormotor zum Antrieb von Hausgeräten, insbesondere Waschmaschinen, mit Nuten bzw. Pollücken (13,14) aufweisendem Ständer bzw. Läufer und die Nuten bzw. Pollücken im Sinne einer luftspaltseitig glatten Mantelfläche zudeckenden Verschlußmitteln, **dadurch gekennzeichnet**, daß jeweils als Verschlußmittel ein wendelartig auf das Ständerblechpaket (2) bzw. das Läuferblechpaket (1) aufgebrachter Kunststoffolien-Streifen (7) vorgesehen ist. (FIG 4)

3. Kollektormotor nach Anspruch 1 und/oder 2, **dadurch gekennzeichnet**, daß eine selbstklebende Kunststoffolie vorgesehen ist.

4. Kollektormotor nach Anspruch 1 und/oder 2, **dadurch gekennzeichnet**, daß das Kunststoffolien-Band bzw. der Kunststoffolien-Streifen mittels eines separaten Klebemittels aufgeklebt sind.

5. Kollektormotor nach einem der Ansprüche 1 bis 4, **dadurch gekennzeichnet**, daß die Endkanten (51,52 bzw.61,62) des Kunststoffolien-Bandes (5 bzw.6) bzw. die einander benachbarten Seitenkanten (71,72, 73,74) des Kunstoffolien-Streifens (7) stoßfugig aufgebracht sind. (FIG 2)

6. Kollektormotor nach einem der Ansprüche 1 bis 4, **dadurch gekennzeichnet**, daß die Endkanten (51,52 bzw.61,62) des Kunststoffolien-Bandes (5 bzw.6) bzw. die benachbarten Seitenkanten (71,72) des Kunststoffolien-Streifens (7) überlappend aufgebracht sind. (FIG 1,3,4)

7. Kollektormotor nach Anspruch 6, **dadurch gekennzeichnet**, daß ständerseitig eine Überlappung in Hauptdrehrichtung des Läufers vorgesehen ist.

**8.** Kollektormotor nach Anspruch 6, **dadurch gekennzeichnet**, daß läuferseitig eine Überlappung entgegen der Hauptdrehrichtung des Läufers vorgesehen ist.

**9.** Kollektormotor nach Anspruch 6, **dadurch gekennzeichnet**, daß das Kunststoffolien-Band (5 bzw.6) bzw. der Kunststoff-Streifen (7) mehrlagig aufgebracht sind.

**10.** Kollektormotor nach einem der Ansprüche 1 bis 9, **dadurch gekennzeichnet**, daß bei einem mit Pollücken (13,14) versehenden Ständerblechpaket (1) bzw. Läuferblechpaket (2) die luftspaltseitigen Zwischenräume zwischen den Pollücken (13,14) mit zwischengelegten Auflage-Brücken (15,16) für das Kunststoffolien-Band (5) bzw. den Kunststoffolien-Streifen ausgefüllt sind. (FIG 1)

**Claims**

**1.** Commutator motor for driving domestic appliances, in particular washing machines, with a rotor and a stator having slots and pole gaps (13, 14) respectively, and with closing means covering the respective slots and pole gaps to form a lateral surface which is smooth on the air gap side, **characterised in that,** in each case, there is provided as the closing means a plastics foil band (5 and 6) in one piece which is applied to the stator lamination stack (2) and rotor lamination stack (1) respectively in the peripheral direction (Figures 1, 2).

**2.** Commutator motor for driving domestic appliances, in particular washing machines, with a rotor and a stator having slots and pole gaps (13, 14) respectively, and with closing means covering the respective slots and pole gaps to form a lateral surface which is smooth on the air gap side, **characterised in that,** in each case, there is provided as the closing means a plastics foil strip (7) which is applied helically to the stator lamination stack (2) and rotor lamination stack (1) respectively (Figure 4).

**3.** Commutator motor according to claim 1 and/or 2, **characterised in that** a self-adhering plastics foil is provided.

**4.** Commutator motor according to claim 1 and/or 2, **characterised in that** the respective plastics foil band and plastics foil strip are glued on by means of a separate adhesive.

**5.** Commutator motor according to one of claims 1 to 4, **characterised in that** the respective ends (51, 52 and 61, 62 respectively) of the plastics foil band (5 and 6 respectively) and mutually adjacent side edges (71, 72, 73, 74) of the plastics foil strip (7) are applied in butt-jointed manner (Figure 2).

**6.** Commutator motor according to one of claims 1 to 4, **characterised in that** the respective ends (51, 52 and 61, 62 respectively) of the plastics foil band (5 and 6 respectively) and adjacent side edges (71, 72) of the plastics foil strip (7) are applied in overlapping manner (Figures 1, 3, 4).

**7.** Commutator motor according to claim 6, **characterised in that,** on the stator side, an overlap is provided in the main direction of rotation of the rotor.

**8.** Commutator motor according to claim 6, **characterised in that,** on the rotor side, an overlap is provided in the opposite direction to the main direction of rotation of the rotor.

**9.** Commutator motor according to claim 6, **characterised in that** the respective plastics foil band (5 and 6 respectively) and plastics strip (7) are applied in several layers.

**10.** Commutator motor according to one of claims 1 to 9, **characterised in that,** in the case of a respective stator lamination stack (1) (sic) and rotor lamination stack (2)(sic) provided with pole gaps (13, 14), the spaces on the air gap side between the pole gaps (13, 14) are filled by interposed support bridges (15, 16) for the respective plastics foil band (5) and plastics foil strip (Figure 1).

**Revendications**

**1.** Moteur à collecteur servant à entraîner des appareils ménagers, notamment des machines à laver, comportant un rotor et un stator possédant des encoches et des espaces interpolaires (13,14), et des moyens de fermeture recouvrant les encoches et les espaces interpolaires à la manière d'une surface enveloppe lisse du côté des entrefers, caractérisé par le fait qu'il est prévu respectivement, comme moyens de fermeture, une bande formée d'une feuille en matière plastique (5 ou 6), qui est réalisée d'un seul tenant et qui est déposée dans la direction circonférentielle sur le paquet de tôles (2) du stator et sur le paquet de tôles (1) du rotor (figures 1, 2).

2.  Moteur à collecteur servant à entraîner des appareils ménagers, notamment des machines à laver, comportant un rotor et un stator comportant des encoches et des espaces interpolaires (13,14), et des moyens de fermeture recouvrant les encoches et les espaces interpolaires à la manière d'une surface enveloppe lisse du côté des entrefers, caractérisé par le fait
qu'il est prévu respectivement, comme moyens de fermeture, un ruban formé d'une feuille en matière plastique (7) qui est disposé selon un agencement hélicoïdal sur le paquet de tôles (2) du stator et sur le paquet de tôles (1) du rotor (figure 4).

3.  Moteur à collecteur suivant la revendication 1 et/ou 2, caractérisé par le fait qu'il est prévu une feuille de matière plastique autoadhésive.

4.  Moteur à collecteur suivant la revendication 1 et/ou 2, caractérisé par le fait que la bande en forme de feuille en matière plastique et le ruban formé d'une feuille en matière plastique sont collés au moyen d'un adhésif distinct.

5.  Moteur à collecteur suivant l'une des revendications 1 à 4, caractérisé par le fait que les bords terminaux (51,52 ou 61,62) de la bande formée d'une feuille en matière plastique (5 ou 6) ou les bords latéraux (7,72,73,74), qui sont voisins l'un de l'autre, du ruban formé d'une feuille en matière plastique (7), sont disposés en aboutement à joint vif (figure 2).

6.  Moteur à collecteur suivant l'une des revendication 4, caractérisé par le fait que les bords terminaux (51,52 ou 61,62) de la bande formée d'une feuille en matière plastique (5 ou 6) ou les bords latéraux voisins (71,72) du ruban formé d'une feuille en matière plastique (7) sont disposés en recouvrement. (Figures 1, 3, 4).

7.  Moteur à collecteur suivant la revendication 6, caractérisé par le fait qu'il est prévu, côté stator, un chevauchement dans le sens de rotation principal du rotor.

8.  Moteur à collecteur suivant la revendication 6, caractérisé par le fait que, sur le côté rotor, il est prévu un chevauchement en sens opposé du sens de rotation principal du rotor.

9.  Moteur à collecteur suivant la revendication 6, caractérisé par le fait que la bande formée d'une feuille en matière plastique (5 ou 6) et le ruban formé d'une feuille en matière plastique (7) sont déposés à plusieurs couches.

10. Moteur à collecteur suivant l'une des revendications 1 à 9, caractérisé par le fait que dans le cas d'un paquet de tôles (1) du stator ou d'un paquet de tôles (2) du rotor, pourvus d'espaces interpolaires (13,14), les espaces intercalaires, situés du côté des entrefers, entre les espaces interpolaires (13,14), sont remplis par les étriers intercalés (15,16) de support pour la bande formée d'une feuille en matière plastique (5) et pour le ruban formé d'une feuille en matière plastique. (Figure 1).

FIG 1

FIG 2

FIG 3

FIG 4